# EUROPEAN PATENT APPLICATION

(11) **EP 4 685 625 A1**
(43) Date of publication of application: **28.01.2026**
(21) Application number: 25191052.7
(22) Date of filing: 22.07.2025
(51) Int. Cl.: G06F 3/12, G06F 21/10, H04L 9/40

(54) **SERVICE USE APPLICATION, ELECTRONIC APPARATUS, AND SYSTEM**

(30) Priority: 25.07.2024 JP 2024119333
(71) Applicant: KYOCERA Document Solutions Inc., Osaka-shi, Osaka 540-8585 (JP)
(72) Inventor: NAKATANI, Ryusuke, Osaka-shi, Osaka 540-8585 (JP); MANABE, Hiroshi, Osaka-shi, Osaka 540-8585 (JP); ISHIZU, Ryuichi, Osaka-shi, Osaka 540-8585 (JP)
(74) Representative: Viering, Jentschura & Partner mbB Patent- und Rechtsanwälte

(57) **Abstract**

A service use application (47b) is a service use application (47b) that is an application program for using a cloud service that requires a license. An electronic apparatus (40) is caused to realize a service use unit (48b) that uses the cloud service. In a case where the service use application (47b) is activated and a setting of a tenant name of a tenant to which the electronic apparatus (40) belongs out of settings of the service use application (47b) is not executed, the service use unit (48b) displays a service information screen (410) that is a screen that shows information related to the cloud service.

## Description

### Field

The present disclosure relates to a service use application that is an application program for using a cloud service, an electronic apparatus, and a system.

### Background

In the related art, an electronic apparatus that uses a cloud service is known (e.g., see Japanese Patent Application Laid-open No. 2019-215739).

### Summary

A service use application according to the present disclosure is a service use application that is a service use application that is an application program for using a cloud service that requires a license. An electronic apparatus is caused to realize a service use unit that uses the cloud service. In a case where the service use application is activated and a setting of a tenant name of a tenant to which the electronic apparatus belongs out of settings of the service use application is not executed, the service use unit displays a service information screen that is a screen that shows information related to the cloud service.

An electronic apparatus according to the present disclosure is an electronic apparatus that is an electronic apparatus that realizes a service use unit that uses a cloud service by executing a service use application that is an application program for using the cloud service that requires a license. In a case where the service use application is activated and a setting of a tenant name of a tenant to which the electronic apparatus belongs out of settings of the service use application is not executed, the service use unit displays a service information screen that is a screen that shows information related to the cloud service.

A system according to the present disclosure includes a service providing system and an electronic apparatus. The service providing system provides a cloud service that requires a license. The electronic apparatus realizes a service use unit that uses the cloud service by executing a service use application that is an application program for using the cloud service that is provided by the service providing system. In a case where the service use application is activated and a setting of a tenant name of a tenant to which the electronic apparatus belongs out of settings of the service use application is not executed, the service use unit displays a service information screen that is a screen that shows information related to the cloud service.

These and other objects, features and advantages of the present disclosure will become more apparent in light of the following detailed description of best mode embodiments thereof, as illustrated in the accompanying drawings.

### Brief Description of Figures

Fig. 1 is a block diagram of a system according to an embodiment of the present disclosure;
Fig. 2 is a block diagram of an example of the service providing system shown in Fig. 1 in a case where it is constituted by a single computer;
Fig. 3 is a diagram showing an example of tenant management information shown in Fig. 2;
Fig. 4 is a diagram showing an example of user management information shown in Fig. 2;
Fig. 5 is a diagram showing an example of device management information shown in Fig. 2;
Fig. 6 is a diagram showing an example of license management information shown in Fig. 2;
Fig. 7 is a block diagram of an example of a user terminal shown in Fig. 1;
Fig. 8 is a block diagram of an example of an image processing apparatus shown in Fig. 1 in a case where it is constituted by an MFP;
Fig. 9 is a diagram showing an example of information included in a configuration file shown in Fig. 8;
Fig. 10 is a diagram showing an example of application setting information shown in Fig. 8;
Fig. 11 is a sequence diagram of an operation of the system shown in Fig. 1 in a case where the user logs in the service providing system through the user terminal;
Fig. 12 is a diagram showing an example of a login page displayed in the operation shown in Fig. 11;
Fig. 13 is a flowchart that is some of operations of the image processing apparatus shown in Fig. 8 in a case where a service use application is activated;
Fig. 14 is a flowchart that is a continuation of the flowchart shown in Fig. 13;
Fig. 15 is a flowchart that is a continuation of the flowchart shown in Fig. 13, which is different from the flowchart shown in Fig. 14;
Fig. 16 is a flowchart that is a continuation of the flowchart shown in Fig. 15;
Fig. 17 is a flowchart of an example of service information screen display processing shown in Fig. 13;
Fig. 18 is a diagram showing an example of a service information screen displayed in the operation shown in Fig. 17, where (a) includes a telephone number of a service person in charge of the image processing apparatus and (b) does not include the telephone number of the service person in charge of the image processing apparatus;
Fig. 19 is a diagram showing an example of an initial setting screen displayed in the operation shown in Fig. 13;
Fig. 20 is a diagram showing an example of an error screen displayed in the operation shown in Fig. 14;
Fig. 21 is a diagram showing an example of a PIN input screen displayed in the operation shown in Fig. 14;
Fig. 22 is a diagram showing an example of an application setting screen displayed in the operation shown in Fig. 14;
Fig. 23 is a flowchart of the service providing system shown in Fig. 2 in a case where activation of the service use application is requested;
Fig. 24 is a diagram showing an example of a license securing instruction screen shown in Fig. 15;
Fig. 25 is a diagram showing an example of a login screen shown in Fig. 16; and
Fig. 26 is a diagram showing an example of a service information screen displayed in the operation shown in Fig. 17, where (a) includes a code image and a telephone number of a service person in charge of the image processing apparatus and (b) includes the code image and does not include the telephone number of the service person in charge of the image processing apparatus.

### Detailed Description

Hereinafter, an embodiment of the present disclosure will be described with reference to the drawings.

First of all, a configuration of the system according to the embodiment of the present disclosure will be described.

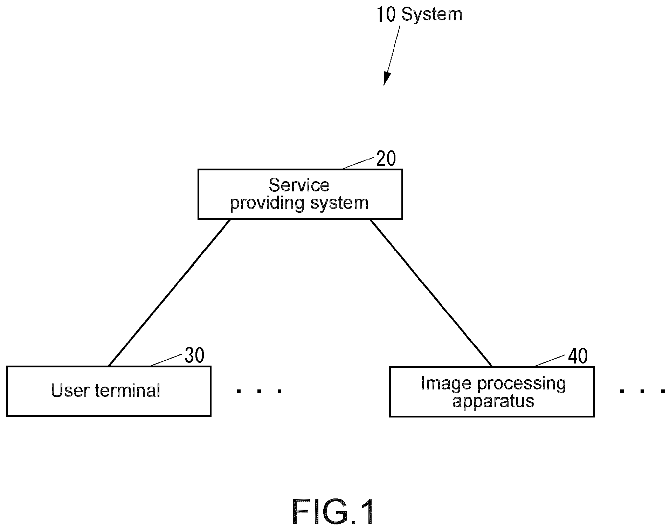

Fig. 1 is a block diagram of a system 10 according to the present embodiment.

As shown in Fig. 1, the system 10 includes a service providing system 20 that provides a cloud service for utilizing data accumulated by scanning in an image processing apparatus. The service providing system 20 may be constituted by a single computer, such as a personal computer (PC), or may be constituted by multiple computers. The service providing system 20 is configured on a cloud.

The system 10 includes a user terminal 30 that is used by a user. The system 10 may include at least one user terminal with a configuration similar to that of the user terminal 30 in addition to the user terminal 30. The user terminal may be constituted by a computer, such as a PC.

The system 10 includes an image processing apparatus 40 that is an electronic apparatus that processes an image. The system 10 may include at least one image processing apparatus with a configuration similar to that of the image processing apparatus 40 in addition to the image processing apparatus 40. For example, the image processing apparatus may be constituted by a multifunction peripheral (MFP).

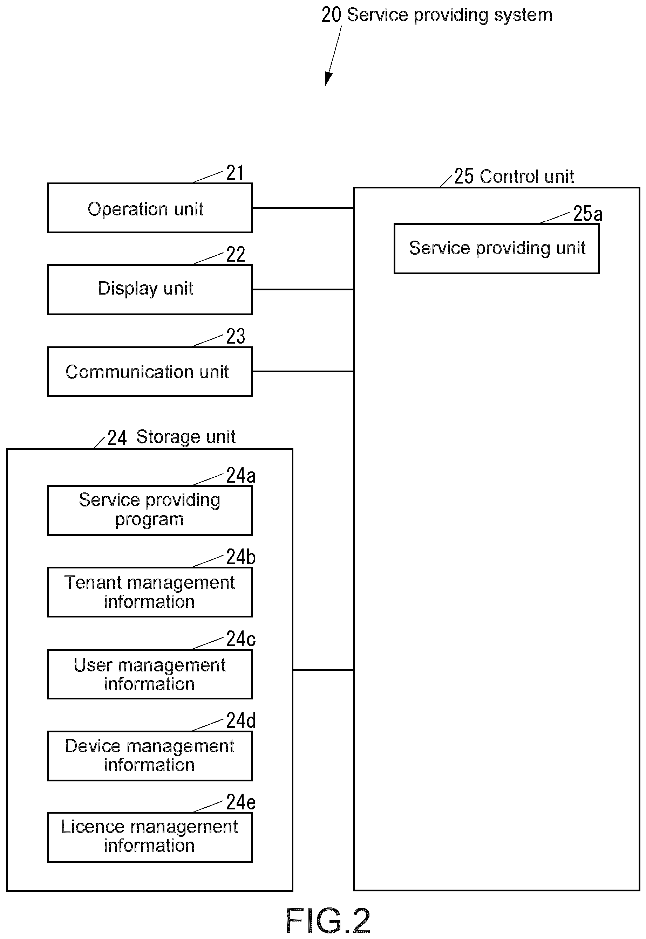

Fig. 2 is a block diagram of an example of the service providing system 20 in a case where it is constituted by a single computer.

As shown in Fig. 2, the service providing system 20 includes an operation unit 21, a display unit 22, a communication unit 23, a storage unit 24, and a control unit 25. The operation unit 21 is an operation device to which various operations are input, such as keyboard and mouse. The display unit 22 is a display device that displays various types of information, such as a liquid crystal display (LCD). The communication unit 23 is a communication device that communicates with an external apparatus via a network, such as a local area network (LAN) or Internet, or directly with a wire or wirelessly without the network. The storage unit 24 is a nonvolatile storage device that stores various types of information, such as a semiconductor memory or a hard disk drive (HDD). The control unit 25 comprehensively controls the service providing system 20.

The storage unit 24 is capable of storing a service providing program 24a for providing a cloud service. For example, the service providing program 24a may be installed in the service providing system 20 during the production phase of the service providing system 20. Alternatively, for example, the service providing program 24a may be additionally installed in the service providing system 20 from an external storage medium such as a universal serial bus (USB) memory. Alternatively, for example, the service providing program 24a may be additionally installed in the service providing system 20 from the network.

The storage unit 24 is capable of storing tenant management information 24b that manages tenants of the service providing system 20.

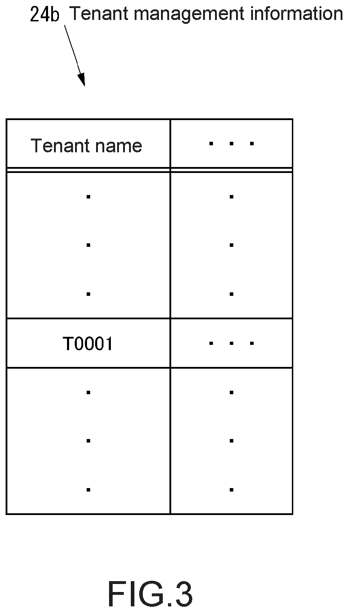

Fig. 3 is a diagram showing an example of the tenant management information 24b.

As shown in Fig. 3, the tenant management information 24b includes, for each tenant, a tenant name that is identification information of the tenant. The tenant management information 24b shown in Fig. 3 is depicted with some information omitted.

As shown in Fig. 2, the storage unit 24 is capable of storing user management information 24c that manages users belonging to the tenants of the service providing system 20.

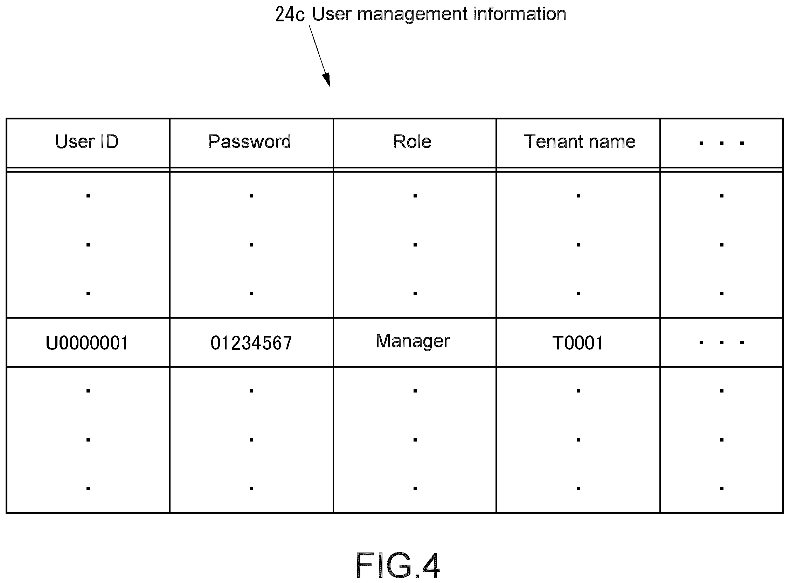

Fig. 4 is a diagram showing an example of the user management information 24c.

As shown in Fig. 4, the user management information 24c includes, for each user, a user ID that is identification information of the user, a password of the user, a role of the user, and a tenant name of the tenant to which the user belongs. For example, the role includes a manager and a general user as a general user of the service providing system 20. The user management information 24c shown in Fig. 4 is depicted with some information omitted.

As shown in Fig. 2, the storage unit 24 is capable of storing device management information 24d that manages image processing apparatuses belonging to the tenants of the service providing system 20.

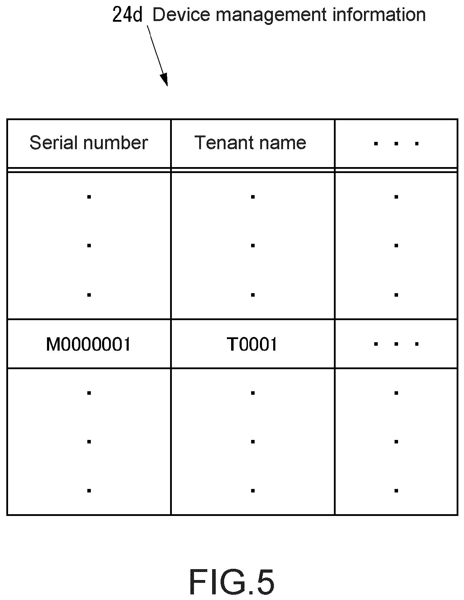

Fig. 5 is a diagram showing an example of the device management information 24d.

As shown in Fig. 5, the device management information 24d includes, for each image processing apparatus, a serial number that is identification information of the image processing apparatus and a tenant name of the tenant to which the image processing apparatus belongs. The device management information 24d shown in Fig. 5 is depicted with some information omitted.

As shown in Fig. 2, the storage unit 24 is capable of storing license management information 24e that manages licenses for using a cloud service provided by the service providing system 20.

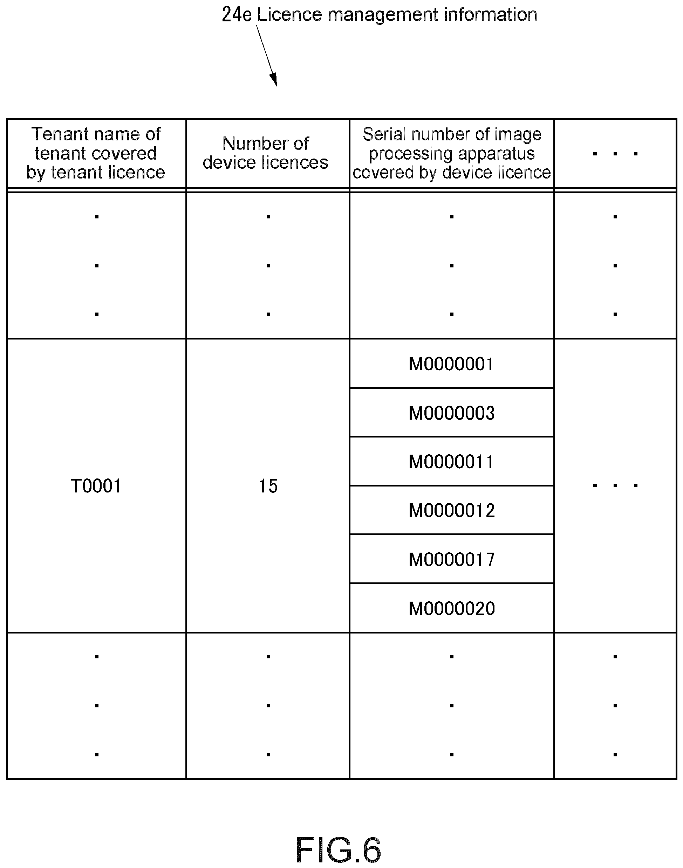

Fig. 6 is a diagram showing an example of the license management information 24e.

As shown in Fig. 6, the license management information 24e includes, for each tenant, a tenant name of the tenant covered by a license (hereinafter, referred to as "tenant license") for the tenant to use the cloud service provided by the service providing system 20, the number of licenses (hereinafter, referred to as "device licenses") for the image processing apparatus to use the cloud service provided by the service providing system 20, and a serial number of the image processing apparatus covered by the device license. The license management information 24e shown in Fig. 6 is depicted with some information omitted.

For example, the control unit 25 shown in Fig. 2 includes a central processing unit (CPU), a read only memory (ROM) that stores programs and various data, and a random access memory (RAM) that is a memory used as a working area for the CPU of the control unit 25. The CPU of the control unit 25 executes the programs stored in the storage unit 24 or the ROM of the control unit 25.

The control unit 25 realizes a service providing unit 25a that provides a cloud service by executing the service providing program 24a.

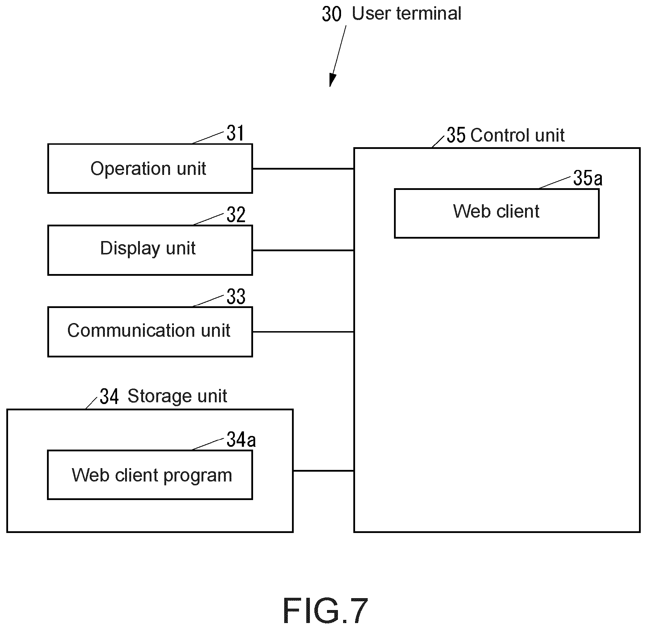

Fig. 7 is a block diagram of an example of the user terminal 30.

As shown in Fig. 7, the user terminal 30 includes an operation unit 31, a display unit 32, a communication unit 33, a storage unit 34, and a control unit 35. The operation unit 31 is an operation device in which various operations are input, such as keyboard and mouse. The display unit 32 is a display device that displays various types of information, such as an LCD. The communication unit 33 is a communication device that communicates with an external apparatus via a network, such as a LAN or Internet, or directly with a wire or wirelessly not via the network. The storage unit 34 is a nonvolatile storage device that stores various types of information, such as a semiconductor memory or HDD. The control unit 35 comprehensively controls the user terminal 30.

The storage unit 34 is capable of storing a web client program 34a for a web client. For example, the web client program 34a may be installed in the user terminal 30 during the production phase of the user terminal 30. Alternatively, for example, the web client program 34a may be additionally installed in the user terminal 30 from an external storage medium such as a USB memory. Alternatively, for example, the web client program 34a may be additionally installed in the user terminal 30 from the network.

For example, the control unit 35 includes a central processing unit (CPU), a read only memory (ROM) that stores programs and various data, and a random access memory (RAM) that is a memory used as a working area for the CPU of the control unit 35. The CPU of the control unit 35 executes the programs stored in the storage unit 34 or the ROM of the control unit 35.

The control unit 35 realizes a web client 35a by executing the web client program 34a.

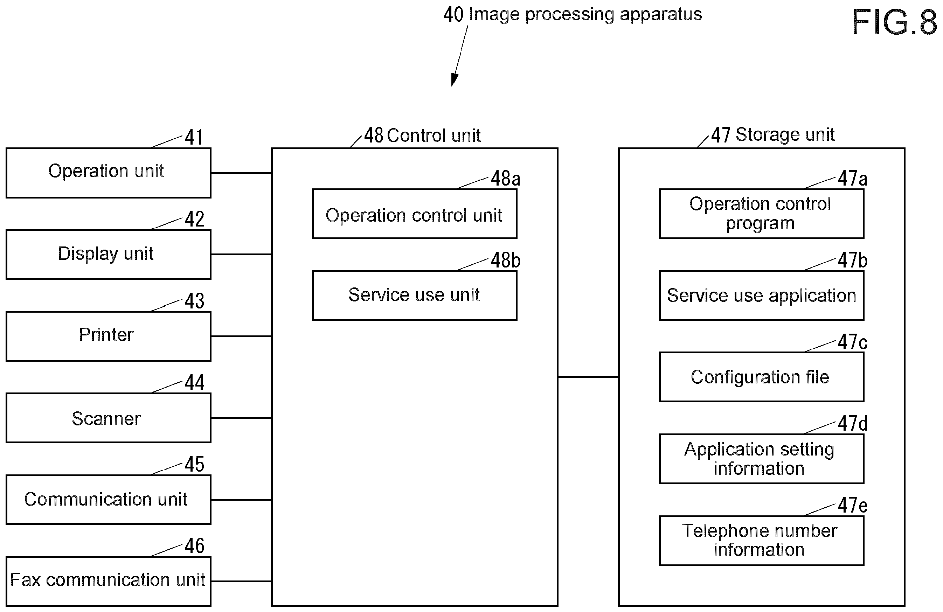

Fig. 8 is a block diagram of an example of the image processing apparatus 40 in a case where it is constituted by an MFP.

As shown in Fig. 8, the image processing apparatus 40 is a computer including an operation unit 41, a display unit 42, a printer 43, a scanner 44, a communication unit 45, and a fax communication unit 46, a storage unit 47, and a control unit 48. The operation unit 41 is an operation device in which various operations are input, such as buttons. The display unit 42 is a display device that displays various types of information, such as an LCD. The printer 43 is a printer device that prints an image on a recording medium such as a paper sheet. The scanner 44 is a reading device that reads an image from an original document. The communication unit 45 is a communication device that communicates with an external apparatus via a network, such as a LAN or Internet, or directly with a wire or wirelessly not via the network. The fax communication unit 46 is a fax device that performs fax communication with an external fax device (not shown) via communication lines such as public telephone lines. The storage unit 47 is a nonvolatile storage device that stores various types of information, such as a semiconductor memory or HDD. The control unit 48 comprehensively controls the image processing apparatus 40.

The storage unit 47 stores an operation control program 47a for controlling the operation of the image processing apparatus 40. For example, the operation control program 47a may be installed in the image processing apparatus 40 during the production phase of the image processing apparatus 40. Alternatively, for example, the operation control program 47a may be additionally installed in the image processing apparatus 40 from an external storage medium such as a USB memory. Alternatively, for example, the operation control program 47a may be additionally installed in the image processing apparatus 40 from the network.

The storage unit 47 is capable of storing a service use application 47b that is an application program for using the cloud service provided by the service providing system 20. The service use application 47b may be installed in the image processing apparatus 40 during the production phase of the image processing apparatus 40. Alternatively, for example, the service use application 47b may be additionally installed in the image processing apparatus 40 from an external storage medium such as a USB memory. Alternatively, for example, the service use application 47b may be additionally installed in the image processing apparatus 40 from the network.

The storage unit 47 is capable of storing a configuration file 47c indicating a value input to a screen for initial setting for the service use application 47b (hereinafter, referred to as "initial setting screen"). The configuration file 47c may be installed in the image processing apparatus 40 together with the service use application 47b.

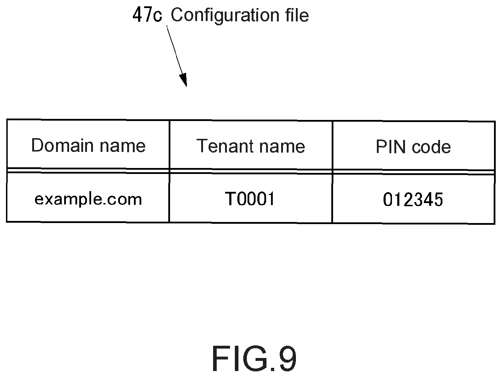

Fig. 9 is a diagram showing an example of information included in the configuration file 47c.

As shown in Fig. 9, the configuration file 47c includes a domain name of the service providing system 20, a tenant name of a tenant to which the image processing apparatus 40 belongs, and a PIN code for the manager.

As shown in Fig. 8, the storage unit 47 is capable of storing information indicating settings of the service use application 47b (hereinafter, referred to as "application setting information") 47d.

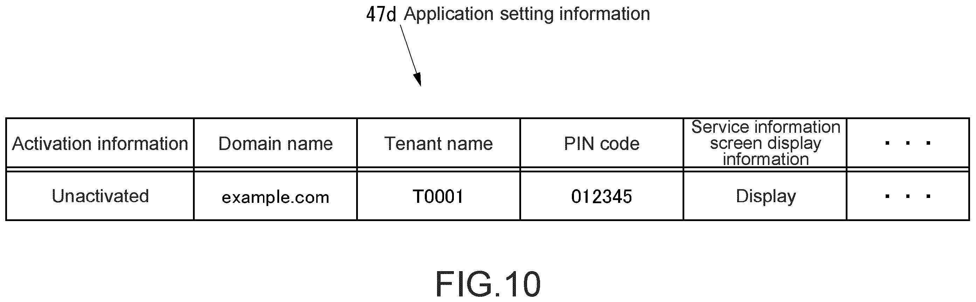

Fig. 10 is a diagram showing an example of the application setting information 47d.

The application setting information 47d shown in Fig. 10 includes activation information indicating whether or not the service use application 47b has been activated, the domain name of the service providing system 20, the tenant name of the tenant to which the image processing apparatus 40 belongs, the PIN code for the manager, and service information screen display information indicating settings as to whether or not to display a screen that shows information related to the cloud service (hereinafter, referred to as "service information screen").

The value of the activation information is "Activated" indicating that the service use application 47b has been activated or "Unactivated" indicating that the service use application 47b has not been activated. A default value of the activation information in the application setting information 47d is "Unactivated."

No values of the domain name, the tenant name, and the PIN code in the application setting information 47d exist by default.

The value of the service information screen display information is that "Display" indicating that the service information screen should be displayed or "Hide" indicating that the service information screen should not be displayed. A default value of the service information screen display information in the application setting information 47d may be "Display."

The application setting information 47d shown in Fig. 10 is depicted with some information omitted.

As shown in Fig. 8, the storage unit 47 is capable of storing telephone number information 47e indicating a telephone number of a service person in charge of the image processing apparatus 40 as inquiry destination information for the user to inquire. The service person is capable of operating the image processing apparatus 40 on a maintenance mode by executing a special operation via the operation unit 41. In a case where the image processing apparatus 40 is operating on the maintenance mode, the service person is capable of registering his or her own telephone number in the telephone number information 47e.

For example, the control unit 48 includes a central processing unit (CPU), a read only memory (ROM) that stores programs and various data, and a random access memory (RAM) that is a memory used as a working area for the CPU of the control unit 48. The CPU of the control unit 48 executes the programs stored in the storage unit 47 or the ROM of the control unit 48.

The control unit 48 realizes an operation control unit 48a that controls the operation of the image processing apparatus 40 by executing the operation control program 47a.

The control unit 48 realizes a service use unit 48b that uses the cloud service provided by the service providing system 20 by executing the service use application 47b.

Next, an operation of the system 10 will be described.

Hereinafter, the user terminal 30 will be described, representing the user terminal. However, a user terminal other than the user terminal 30 is also capable of executing an operation similar to that of the user terminal 30.

Similarly, hereinafter, the image processing apparatus 40 will be described, representing the image processing apparatus. However, an image processing apparatus other than the image processing apparatus 40 is also capable of executing an operation similar to that of the image processing apparatus 40.

First of all, an operation of the system 10 in a case where the user logs in the service providing system 20 from the user terminal 30 will be described.

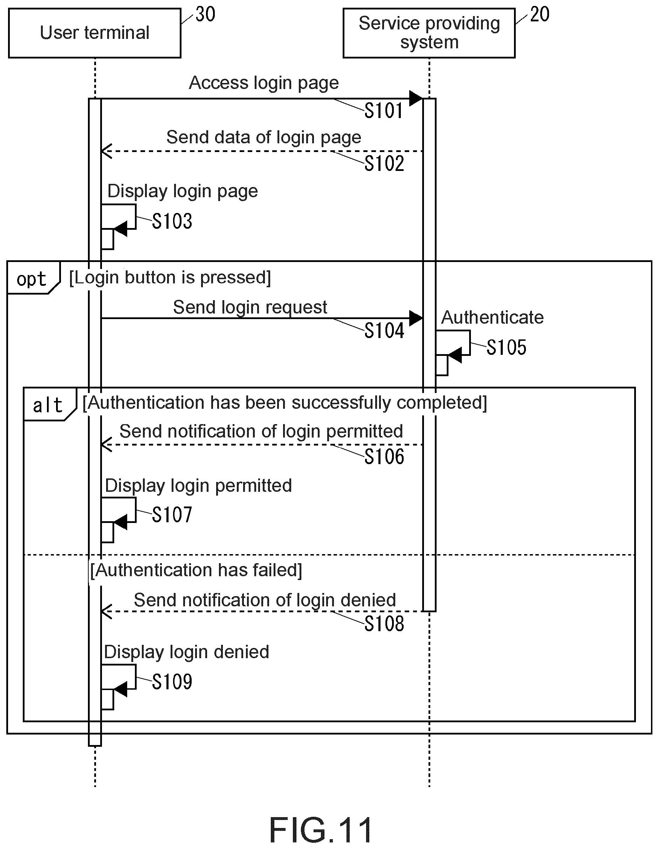

Fig. 11 is a sequence diagram of an operation of the system 10 in a case where the user logs in the service providing system 20 from the user terminal 30.

The user is capable of instructing the user terminal 30 to access a login webpage that is provided by the service providing system 20 (hereinafter, referred to as "login page") via the web client 35a of the user terminal 30. When the web client 35a is instructed to access the login page, as shown in Fig. 11, the web client 35a accesses the login page (S101).

When the service providing unit 25a of the service providing system 20 receives the access in S101, the service providing unit 25a of the service providing system 20 sends data of the login page to the user terminal 30 (S102).

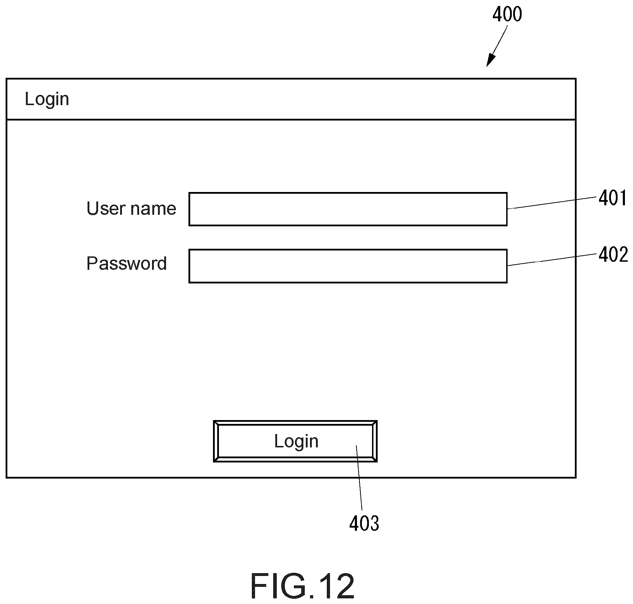

When the web client 35a of the user terminal 30 receives the data sent in S102, the web client 35a of the user terminal 30 displays the login page 400 (e.g., see Fig. 12) on the display unit 32 on the basis of the received data (S103).

Fig. 12 is a diagram showing an example of the login page 400.

The login page 400 shown in Fig. 12 includes a text box 401 for inputting the user ID of the user, a text box 402 for inputting the password of the user, and a login button 403 for receiving an instruction to log into the service providing system 20.

As shown in Fig. 11, when the login button 403 is pressed after the processing in S103 ends, the web client 35a of the user terminal 30 sends a login request using a combination of the user ID input in the text box 401 at a point of time at which the login button 403 is pressed and the password input in the text box 402 at a point of time at which the login button 403 is pressed to the service providing system 20 (S104).

When the service providing unit 25a of the service providing system 20 receives the request sent in S104, the service providing unit 25a of the service providing system 20 executes authentication on the basis of the combination of the user ID and the password included in the received request (S105). Here, in a case where the combination of the user ID and the password included in the request sent in S104 is included in the user management information 24c, the service providing unit 25a determines in S105 that the authentication has been successfully completed. On the other hand, in a case where the combination of the user ID and the password included in the request sent in S104 is not included in the user management information 24c, the service providing unit 25a determines in S105 that the authentication has failed.

When the service providing unit 25a determines in S105 that the authentication has been successfully completed, the service providing unit 25a sends a notification of the user's login permitted to the user terminal 30 (S106).

When the web client 35a of the user terminal 30 receives notification sent in S106, the web client 35a of the user terminal 30 displays the user's login permitted on the display unit 32 (S107).

When the service providing unit 25a of the service providing system 20 determines in S105 that the authentication has failed, the service providing unit 25a of the service providing system 20 sends a notification of the user's login denied to the user terminal 30 (S108).

When the web client 35a of the user terminal 30 receives the notification sent in S108, the web client 35a of the user terminal 30 displays the user's login denied on the display unit 32 (S109).

In a case where the manager has logged into the service providing system 20, the manager is capable of requesting the tenant license of the tenant to which the manager belongs from the service providing system 20 via the web client 35a. In a case where the service providing unit 25a of the service providing system 20 receives the request of the tenant license of the tenant to which the manager belongs, if the tenant name associated with the manager in the user management information 24c has not been stored in the license management information 24e at the time of permitting this tenant license, the service providing unit 25a of the service providing system 20 writes this tenant name in the license management information 24e.

In a case where the manager has logged in the service providing system 20, the manager is capable of requesting the service providing system 20 to edit the number of device licenses of the tenant to which the manager belongs via the web client 35a. In a case where the service providing unit 25a of the service providing system 20 is requested to edit the number of device licenses of the tenant to which the manager belongs, the service providing unit 25a of the service providing system 20 edits the number of device licenses of associated with the tenant name associated with the manager in the user management information 24c in the license management information 24e as it is requested at the time of permitting this editing.

In a case where the manager has logged in the service providing system 20, the manager is capable of requesting the service providing system 20 to edit the image processing apparatus covered by the device license of the tenant to which the manager belongs via the web client 35a. In a case where the service providing unit 25a of the service providing system 20 is requested to edit the image processing apparatus covered by the device license of the tenant to which the manager belongs, the service providing unit 25a of the service providing system 20 edits the serial number of the image processing apparatus associated with the tenant name associated with the manager in the user management information 24c in the license management information 24e as it is requested within such a range that the number of serial numbers of the image processing apparatus associated with the tenant name associated with the manager in the user management information 24c in the license management information 24e is equal to or smaller than the number of device licenses of associated with the tenant name associated with the manager in the user management information 24c in the license management information 24e.

Next, an operation of the image processing apparatus 40 in a case where the service use application 47b is activated will be described.

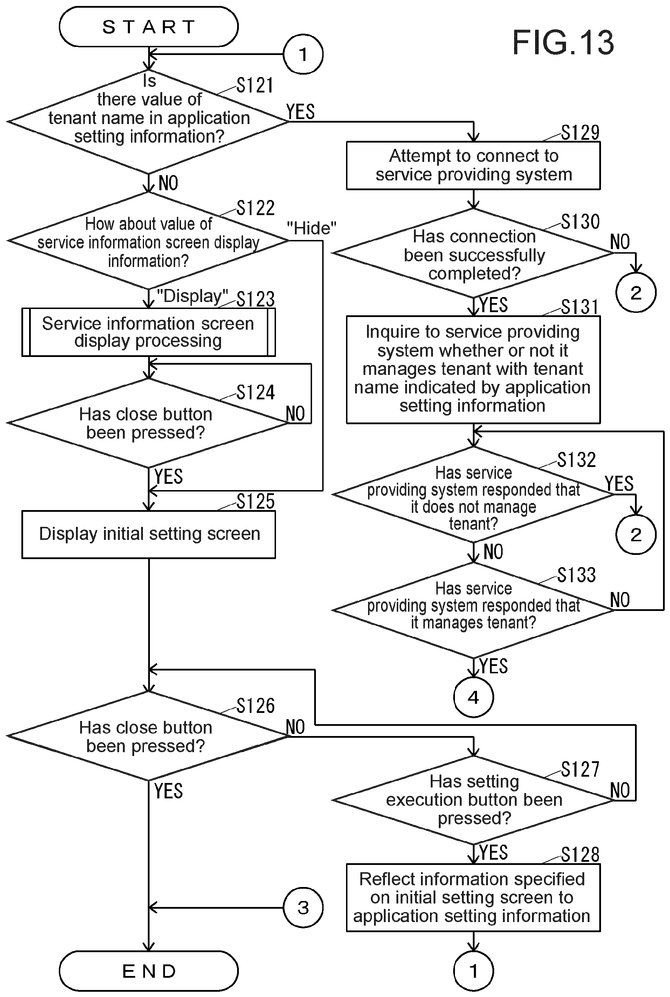

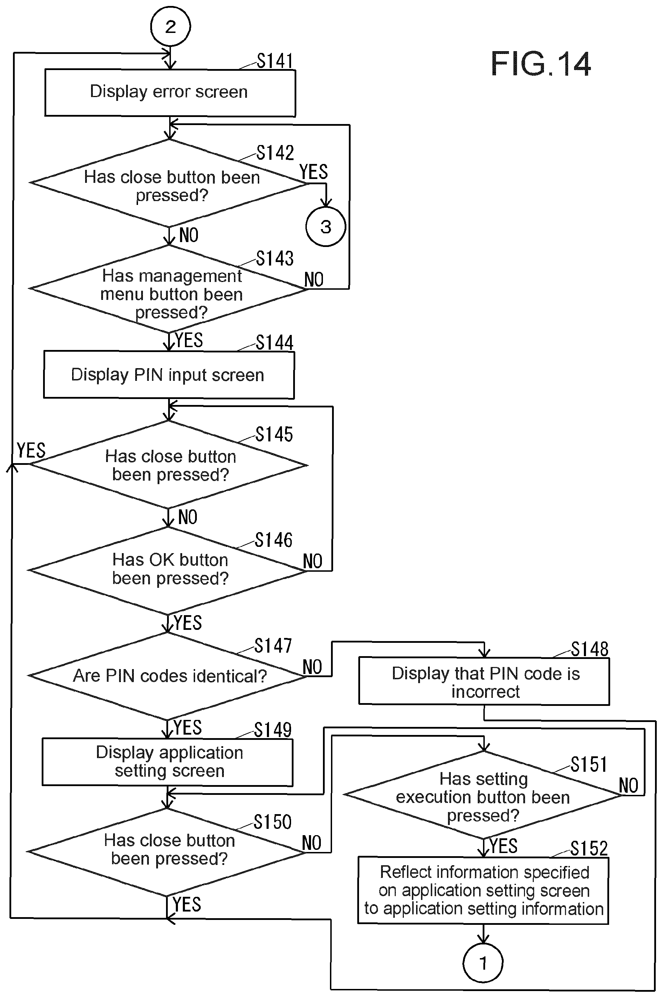

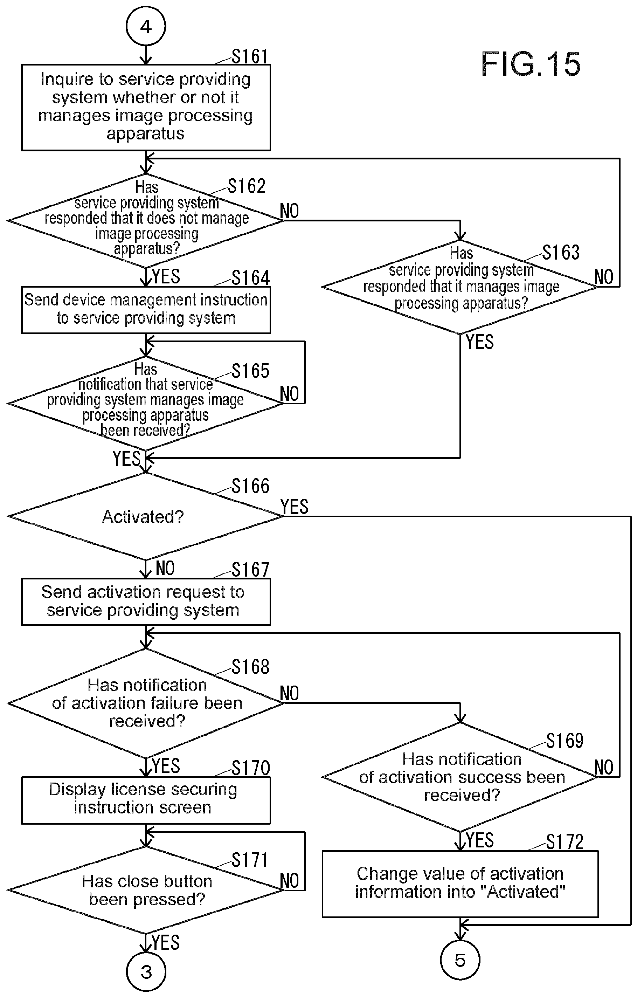

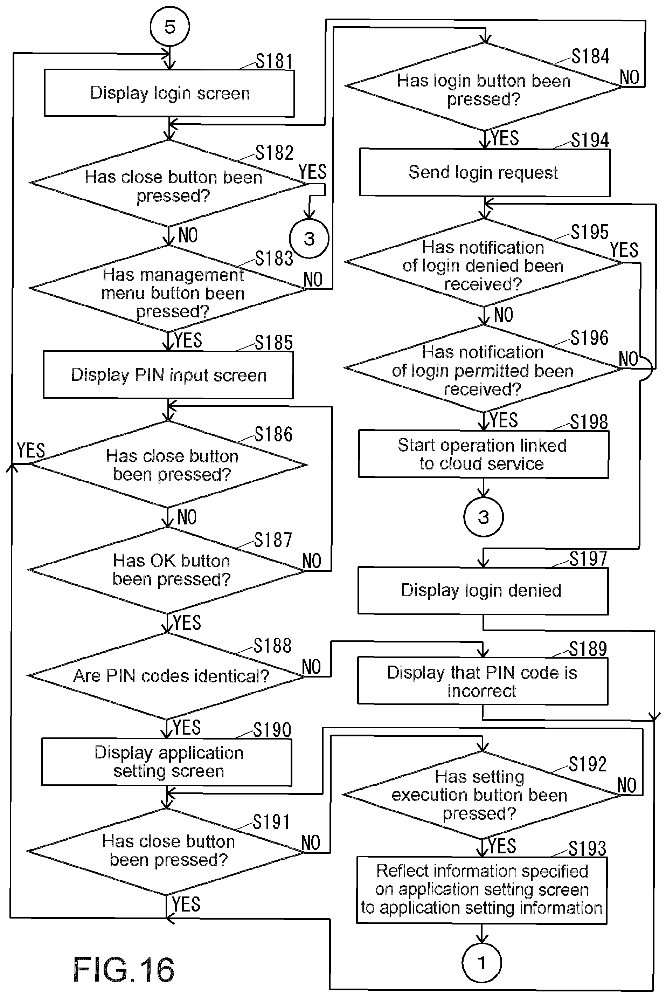

Fig. 13 is a flowchart of some of operations of the image processing apparatus 40 in a case where the service use application 47b is activated. Fig. 14 is a flowchart that is a continuation of the flowchart shown in Fig. 13. Fig. 15 is a flowchart different from the flowchart shown in Fig. 14 that is a continuation of the flowchart shown in Fig. 13. Fig. 16 is a flowchart that is a continuation of the flowchart shown in Fig. 15.

In a case where the operation control unit 48a of the image processing apparatus 40 displays a specific screen, such as a home screen, on the display unit 42, the operation control unit 48a of the image processing apparatus 40 is capable of including an icon for starting the service use application 47b in this screen. Therefore, the user is capable of instructing the image processing apparatus 40 to start the service use application 47b by, for example, pressing the icon for starting the service use application 47b via the operation unit 41. When the operation control unit 48a of the image processing apparatus 40 instructed to start the service use application 47b, the operation control unit 48a of the image processing apparatus 40 starts the service use application 47b. When the service use application 47b is activated, the service use unit 48b of the image processing apparatus 40 executes an operation shown in Figs. 13 to 16.

As shown in Figs. 13 to 16, the service use unit 48b determines whether or not there is a value of the tenant name in the application setting information 47d (S121).

When the service use unit 48b determines in S121 that there is no value of the tenant name in the application setting information 47d, the service use unit 48b determines whether the value of the service information screen display information in the application setting information 47d is "Display" or "Hide" (S122).

When the service use unit 48b determines in S122 that the value of the service information screen display information in the application setting information 47d is "Display," the service use unit 48b executes processing of displaying the service information screen (hereinafter, referred to as "service information screen display processing") (S123).

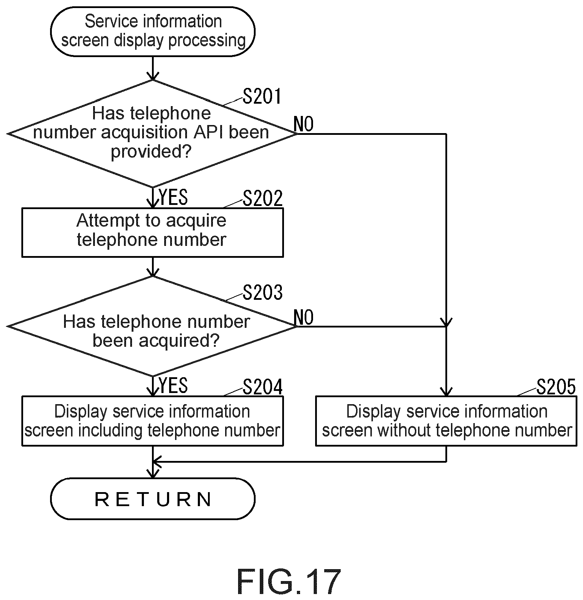

Fig. 17 is a flowchart of an example of the service information screen display processing shown in Fig. 13.

As shown in Fig. 17, the service use unit 48b determines whether or not a telephone number acquisition API that is an application programming interface (API) for acquiring the telephone number from the telephone number information 47e has been provided by the operation control unit 48a (S201).

When the service use unit 48b determines in S201 that the telephone number acquisition API has been provided by the operation control unit 48a, the service use unit 48b attempts to acquire the telephone number from the telephone number information 47e by using the telephone number acquisition API (S202).

When the processing of S202 ends, the service use unit 48b determines whether or not the service use unit 48b has acquired the telephone number in S202 (S203).

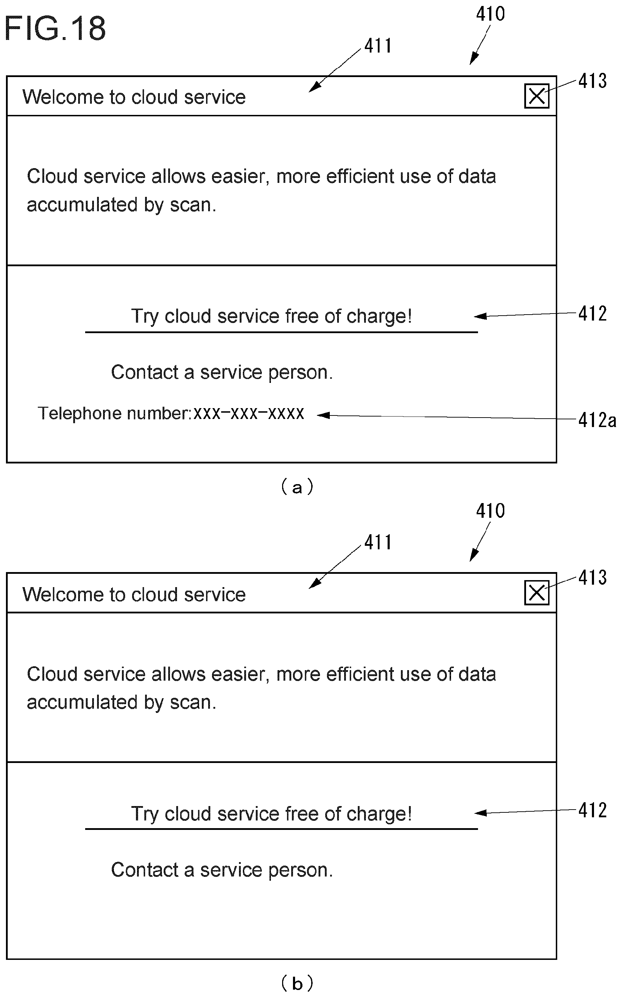

When the service use unit 48b determines in S203 that the service use unit 48b has acquired the telephone number in S202, the service use unit 48b displays a service information screen 410 (e.g., see (a) of Fig. 18) including the telephone number acquired in S202 on the display unit 42 (S204).

When the service use unit 48b determines in S201 that the telephone number acquisition API is not provided by the operation control unit 48a or when the service use unit 48b determines in S203 that the service use unit 48b has failed to acquire the telephone number in S202, the service use unit 48b displays service information screen 410 (e.g., see (b) of Fig. 18) not including the telephone number on the display unit 42 (S205).

(a) of Fig. 18 is a diagram showing an example of the service information screen 410 including the telephone number of the service person in charge of the image processing apparatus 40. (b) of Fig. 18 is a diagram showing an example of the service information screen 410 not including the telephone number of the service person in charge of the image processing apparatus 40.

The service information screen 410 shown in (a) of Fig. 18 includes a text 411 for introducing the cloud service provided by the service providing system 20, a text 412 for encouraging the trial of the cloud service, and a close button 413 for closing the service information screen 410. The text 412 includes a text 412a that shows the telephone number acquired in S202. The service information screen 410 is capable of encouraging the user to make a contract with the cloud service by using the text 411 and the text 412.

A configuration of the service information screen 410 shown in (b) of Fig. 18 is identical to the configuration of the service information screen 410 shown in (a) of Fig. 18, except that it does not include the text 412a (see (a) of Fig. 18).

When the close button 413 of the service information screen 410 is pressed, the service use unit 48b terminates the display of the service information screen 410 on the display unit 42.

As shown in Fig. 17, when the processing of S204 or S205 ends, the service use unit 48b terminates the service information screen display processing shown in Fig. 17.

As shown in Figs. 13 to 16, when the service information screen display processing in S123 ends, the service use unit 48b determines whether or not the close button 413 has been pressed until the service use unit 48b determines that the close button 413 of the service information screen 410 has been pressed (S124).

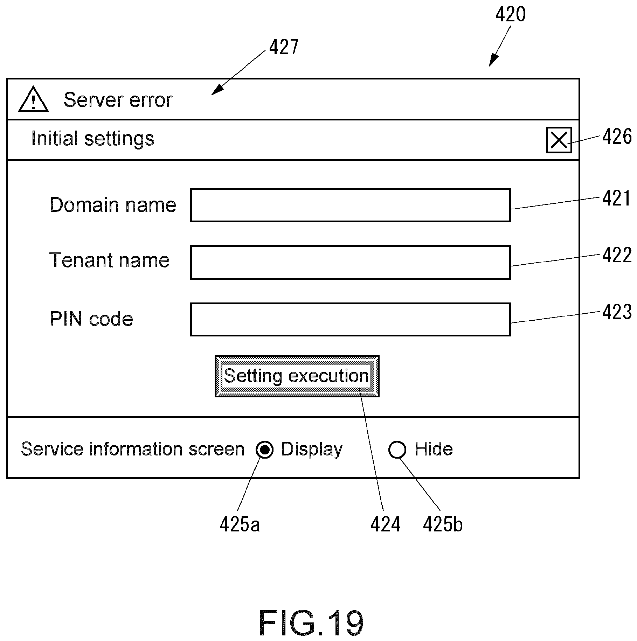

When the service use unit 48b determines in S122 that the value of the service information screen display information of the application setting information 47d is "Hide" or when the service use unit 48b determines in S124 that the close button 413 has been pressed, the service use unit 48b displays an initial setting screen 420 (e.g., see Fig. 19) on the display unit 42 (S125).

Fig. 19 is a diagram showing an example of the initial setting screen 420.

The initial setting screen 420 shown in Fig. 19 includes a text box 421 for specifying the domain name of the service providing system 20, a text box 422 for specifying the tenant name of the tenant to which the image processing apparatus 40 belongs, a text box 423 for specifying the PIN code for the manager, a setting execution button 424 for setting values specified on the initial setting screen 420, a radio button 425a for specifying "Display" as the value of the service information screen display information, a radio button 425b for specifying "Hide" as the value of the service information screen display information, a close button 426 for closing the initial setting screen 420, and a text 427 that shows an error message.

In the text box 421, the domain name indicated by the application setting information 47d is input at a point of time at which the initial setting screen 420 is displayed. Therefore, in the text box 421, no value is input at a point of time at which the initial setting screen 420 is displayed for the first time. It should be noted that in a case where the configuration file 47c is stored in the storage unit 47 and the configuration file 47c stored in the storage unit 47 indicates the domain name, the service use unit 48b inputs the domain name indicated by the configuration file 47c in the text box 421 at a point of time at which the initial setting screen 420 is displayed.

In the text box 422, the tenant name indicated by the application setting information 47d is input at a point of time at which the initial setting screen 420 is displayed. Therefore, in the text box 422, no value is input at a point of time at which the initial setting screen 420 is displayed for the first time. It should be noted that in a case where the configuration file 47c is stored in the storage unit 47 and the configuration file 47c stored in the storage unit 47 indicates the tenant name, the service use unit 48b inputs the tenant name indicated by the configuration file 47c in the text box 422 at a point of time at which the initial setting screen 420 is displayed.

In the text box 423, the PIN code indicated by the application setting information 47d is input at a point of time at which the initial setting screen 420 is displayed. Therefore, in the text box 423, no value is input at a point of time at which the initial setting screen 420 is displayed for the first time. It should be noted that in a case where the configuration file 47c is stored in the storage unit 47 and the configuration file 47c stored in the storage unit 47 indicates the PIN code, the service use unit 48b inputs the PIN code indicated by the configuration file 47c in the text box 423 at a point of time at which the initial setting screen 420 is displayed.

The setting execution button 424 is grayed out and inoperable in a case where no value is input to at least one of the text box 421, the text box 422, and the text box 423. The setting execution button 424 is operable only in a case where certain values are input to all the text box 421, the text box 422, and the text box 423.

Only either one of the radio button 425a and the radio button 425b is constantly selected. The radio button 425a and the radio button 425b enters in a state depending on the value of the service information screen display information in the application setting information 47d at a point of time at which the initial setting screen 420 is displayed. Therefore, in a case where the default value of the service information screen display information in the application setting information 47d is "Display," only the radio button 425a of the radio button 425a and the radio button 425b is selected at a point of time at which the initial setting screen 420 is displayed for the first time. Although not specifically shown in Figs. 13 to 16, the service use unit 48b changes the value of the service information screen display information in the application setting information 47d in accordance with the states of the radio button 425a and the radio button 425b at a point of time at which the states of the radio button 425a and the radio button 425b are changed.

When the setting execution button 424 or the close button 426 of the initial setting screen 420 is pressed, the service use unit 48b terminates the display of the initial setting screen 420 on the display unit 42.

As shown in Figs. 13 to 16, when the processing of S125 ends, the service use unit 48b determines whether or not the close button 426 has been pressed (S126).

When the service use unit 48b determines in S126 that the close button 426 has not been pressed, the service use unit 48b determines whether or not the setting execution button 424 has been pressed (S127).

When the service use unit 48b determines in S127 that the setting execution button 424 has not been pressed, the service use unit 48b executes the processing in S126.

When the service use unit 48b determines in S126 that the close button 426 has been pressed, the service use unit 48b terminates the operation shown in Figs. 13 to 16.

When the service use unit 48b determines in S127 that the setting execution button 424 has been pressed, the service use unit 48b reflects the information specified on the initial setting screen 420 at a point of time at which the setting execution button 424 is pressed to the application setting information 47d (S128) and executes the processing in S121.

When the service use unit 48b determines in S121 that there is a value of the tenant name in the application setting information 47d, the service use unit 48b attempts to connect to the service providing system 20 by using the domain name indicated by the application setting information 47d (S129).

When the processing of S129 ends, the service use unit 48b determines whether or not the connection to the service providing system 20 has been successfully completed in S129 (S130).

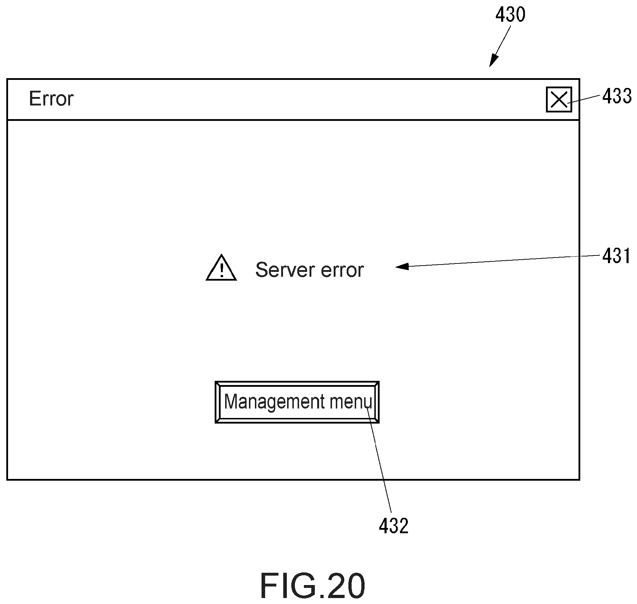

When the service use unit 48b determines in S130 that the connection to the service providing system 20 has failed in S129, the service use unit 48b displays a screen including an error message (hereinafter, referred to as "error screen") 430 (e.g., see Fig. 20) on the display unit 42 (S141).

Fig. 20 is a diagram showing an example of the error screen 430.

The error screen 430 shown in Fig. 20 includes a text 431 that shows an error message, a management menu button 432 for displaying a management menu operable by the manager, and a close button 433 for closing the error screen 430.

When the management menu button 432 or the close button 433 is pressed, the service use unit 48b terminates the display of the error screen 430 on the display unit 42.

As shown in Figs. 13 to 16, when the processing of S141 ends, the service use unit 48b determines whether or not the close button 433 has been pressed (S142).

When the service use unit 48b determines in S142 that the close button 433 has not been pressed, the service use unit 48b determines whether or not the management menu button 432 has been pressed (S143).

When the service use unit 48b determines in S143 that the management menu button 432 has not been pressed, the service use unit 48b executes the processing in S142.

When the service use unit 48b determines in S142 that the close button 433 has been pressed, the service use unit 48b terminates the operation shown in Figs. 13 to 16.

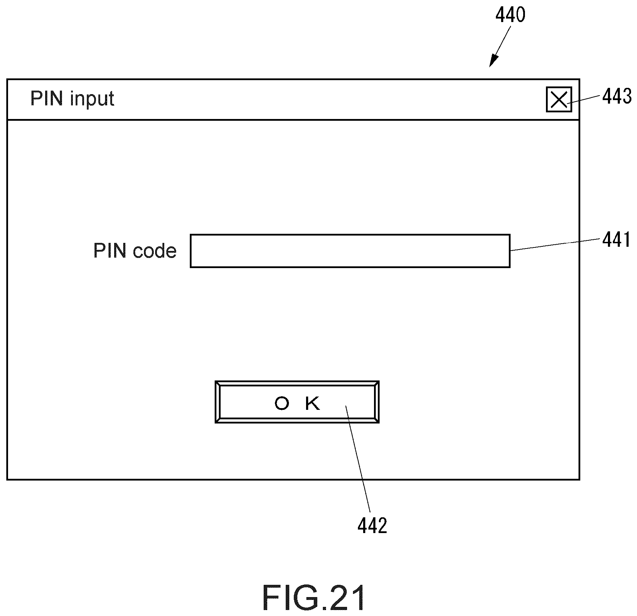

When the service use unit 48b determines in S143 that the management menu button 432 has been pressed, the service use unit 48b displays a screen for inputting the PIN code of the manager (hereinafter, referred to as "PIN input screen") 440 (e.g., see Fig. 21) on the display unit 42 (S144).

Fig. 21 is a diagram showing an example of the PIN input screen 440.

The PIN input screen 440 shown in Fig. 21 includes a text box 441 for inputting the PIN code of the manager, an OK button 442 for confirming the PIN code input by the text box 441, and a close button 443 for closing the PIN input screen 440.

When the OK button 442 or the close button 443 is pressed, the service use unit 48b terminates the display of the PIN input screen 440 on the display unit 42.

As shown in Figs. 13 to 16, when the processing of S144 ends, the service use unit 48b determines whether or not the close button 443 has been pressed (S145).

When the service use unit 48b determines in S145 that the close button 443 has not been pressed, the service use unit 48b determines whether or not the OK button 442 has been pressed (S146).

When the service use unit 48b determines in S146 that the OK button 442 has not been pressed, the service use unit 48b executes the processing in S145.

When the service use unit 48b determines in S145 that the close button 443 has been pressed, the service use unit 48b executes the processing in S141.

When the service use unit 48b determines in S146 that the OK button 442 has been pressed, the service use unit 48b determines whether or not the PIN code input to the text box 441 at a point of time at which the OK button 442 is pressed is identical to the PIN code indicated by the application setting information 47d (S147).

When the service use unit 48b determines in S147 that the PIN code input to the text box 441 at a point of time at which the OK button 442 is pressed is not identical to the PIN code indicated by the application setting information 47d, the service use unit 48b displays that the PIN code is incorrect on the display unit 42 for a specific time (S148) and executes the processing in S141.

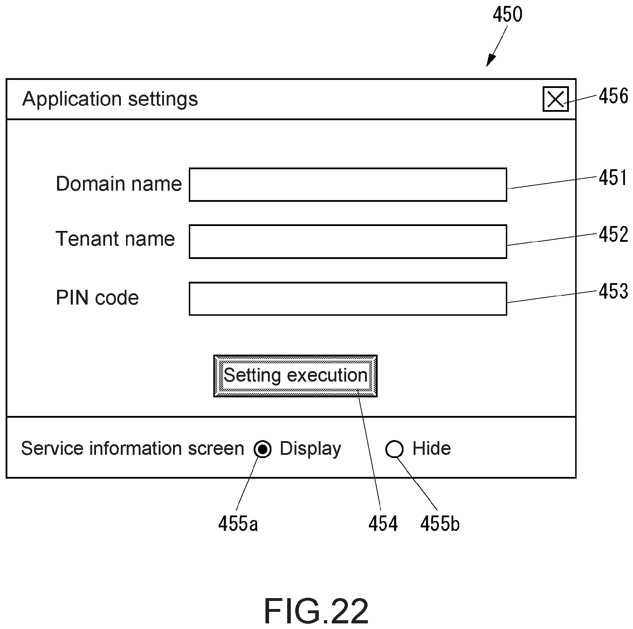

When the service use unit 48b determines in S147 that the PIN code input to the text box 441 at a point of time at which the OK button 442 is pressed is identical to the PIN code indicated by the application setting information 47d, the service use unit 48b displays a screen for setting the service use application 47b (hereinafter, referred to as "application setting screen") 450 (e.g., see Fig. 22) on the display unit 42 (S149).

Fig. 22 is a diagram showing an example of the application setting screen 450.

The application setting screen 450 shown in Fig. 22 includes a text box 451 for specifying the domain name of the service providing system 20, a text box 452 for specifying the tenant name of the tenant to which the image processing apparatus 40 belongs, a text box 453 for specifying the PIN code for the manager, a setting execution button 454 for setting values specified on the application setting screen 450, a radio button 455a for specifying "Display" as the value of the service information screen display information, and a radio button 455b for specifying "Hide" as the value of the service information screen display information, and a close button 456 for closing the application setting screen 450.

In the text box 451, the domain name indicated by the application setting information 47d is input at a point of time at which the application setting screen 450 is displayed.

In the text box 452, the tenant name indicated by the application setting information 47d is input at a point of time at which the application setting screen 450 is displayed.

In the text box 453, the PIN code indicated by the application setting information 47d is input at a point of time at which the application setting screen 450 is displayed.

The setting execution button 454 is grayed out and inoperable in a case where no value is input to at least one of the text box 451, the text box 452, and the text box 453. The setting execution button 454 is operable only in a case where all certain values are input to the text box 451, the text box 452, and the text box 453.

Only either one of the radio button 455a and the radio button 455b is constantly selected. At a point of time at which the application setting screen 450 is displayed, the radio button 455a of the radio button 455a and the radio button 455b is selected in a case where the value of the service information screen display information in the application setting information 47d is "Display" and the radio button 455b is selected in a case where the value of the service information screen display information in the application setting information 47d is "Hide." Although not specifically shown in Figs. 13 to 16, the service use unit 48b changes the value of the service information screen display information in the application setting information 47d in accordance with the states of the radio button 455a and the radio button 455b at a point of time at which the states of the radio button 455a and the radio button 455b are changed.

When the setting execution button 454 or the close button 456 on the application setting screen 450 is pressed, the service use unit 48b terminates the display of the application setting screen 450 on the display unit 42.

As shown in Figs. 13 to 16, when the processing of S149 ends, the service use unit 48b determines whether or not the close button 456 has been pressed (S150).

When the service use unit 48b determines in S150 that the close button 456 has not been pressed, the service use unit 48b determines whether or not the setting execution button 454 has been pressed (S151).

When the service use unit 48b determines in S151 that the setting execution button 454 has not been pressed, the service use unit 48b executes the processing in S150.

When the service use unit 48b determines in S150 that the close button 456 has been pressed, the service use unit 48b executes the processing in S141.

When the service use unit 48b determines in S151 that the setting execution button 454 has been pressed, the service use unit 48b reflects the information specified on the application setting screen 450 at a point of time at which the setting execution button 454 has been pressed to the application setting information 47d (S152) and executes the processing in S121.

When the service use unit 48b determines in S130 that the connection to the service providing system 20 has been successfully completed in S129, the service use unit 48b inquires to the service providing system 20 whether or not the service providing system 20 manages the tenant with the tenant name indicated by the application setting information 47d (S131).

In a case where the service providing unit 25a of the service providing system 20 receives the inquiry in S131, the service providing unit 25a of the service providing system 20 responds to the image processing apparatus 40 that the service providing unit 25a of the service providing system 20 manages the tenant with the tenant name inquired in S131 when the tenant name inquired in S131 is included in the tenant management information 24b. Otherwise, the service providing unit 25a of the service providing system 20 responds to the image processing apparatus 40 that the service providing unit 25a of the service providing system 20 does not manage the tenant with the tenant name inquired in S131 when the tenant name inquired in S131 is not included in the tenant management information 24b.

After the processing in S131 ends, the service use unit 48b of the image processing apparatus 40 determines whether or not the service use unit 48b of the image processing apparatus 40 has been responded from the service providing system 20 that the service providing system 20 does not manage the tenant with the tenant name inquired in S131 (S132).

When the service use unit 48b determines in S132 that the service use unit 48b has not been responded from the service providing system 20 that the service providing system 20 does not manage the tenant with the tenant name inquired in S131, the service use unit 48b determines whether or not the service use unit 48b has been responded from the service providing system 20 that the service providing system 20 manages the tenant with the tenant name inquired in S131 (S133).

When the service use unit 48b determines in S133 that the service use unit 48b has not been responded from the service providing system 20 that the service providing system 20 manages the tenant with the tenant name inquired in S131, the service use unit 48b executes the processing in S132.

When the service use unit 48b determines in S132 that the service use unit 48b has been responded from the service providing system 20 that the service providing system 20 does not manage the tenant with the tenant name inquired in S131, the service use unit 48b executes the processing in S141.

When the service use unit 48b determines in S133 that the service use unit 48b has been responded from the service providing system 20 that the service providing system 20 manages the tenant with the tenant name inquired in S131, the service use unit 48b inquires to the service providing system 20 whether or not the service providing system 20 manages the image processing apparatus 40 (S161). The service use unit 48b includes the serial number of the image processing apparatus 40 and the tenant name indicated by the application setting information 47d in the inquiry in S161.

In a case where the service providing unit 25a of the service providing system 20 receives the inquiry in S161, the service providing unit 25a of the service providing system 20 responds to the image processing apparatus 40 that the service providing system 20 manages the image processing apparatus 40 when the combination of the serial number and the tenant name included in the inquiry in S161 is included in the device management information 24d. Otherwise, the service providing unit 25a of the service providing system 20 responds to the image processing apparatus 40 that the service providing system 20 does not manage the image processing apparatus 40 when the combination of the serial number and the tenant name included in the inquiry in S161 is not included in the device management information 24d.

After the processing in S161 ends, the service use unit 48b of the image processing apparatus 40 determines whether or not the service use unit 48b of the image processing apparatus 40 has been responded from the service providing system that the service providing system does not manage the image processing apparatus 40 inquired in S161 (S162).

When the service use unit 48b determines in S162 that the service use unit 48b has not been responded from the service providing system that the service providing system does not manage the image processing apparatus 40 inquired in S161, the service use unit 48b determines whether or not the service use unit 48b has been responded from the service providing system that the service providing system manages the image processing apparatus 40 inquired in S161 (S163).

When the service use unit 48b determines in S163 that the service use unit 48b has not been responded from the service providing system that the service providing system manages the image processing apparatus 40 inquired in S161, the service use unit 48b executes the processing in S162.

When the service use unit 48b determines in S162 that the service providing system has responded to the service use unit 48b that the service providing system does not manage the image processing apparatus 40 inquired in S161, the service use unit 48b sends an instruction to manage the image processing apparatus 40 (hereinafter, referred to as "device management instruction") to the service providing system 20 (S164). The service use unit 48b includes the serial number of the image processing apparatus 40 and the tenant name indicated by the application setting information 47d in the device management instruction.

When the service providing unit 25a of the service providing system 20 receives the device management instruction sent in S164, the service providing unit 25a of the service providing system 20 includes the combination of the serial number and the tenant name included in the received device management instruction in the device management information 24d, and then sends a notification that the service providing unit 25a of the service providing system 20 manages the image processing apparatus 40 to the image processing apparatus 40.

When the processing of S164 ends, the service use unit 48b of the image processing apparatus 40 determines whether or not the service use unit 48b of the image processing apparatus 40 has received the notification that the service providing system 20 manages the image processing apparatus 40 from the service providing system 20 until the service use unit 48b of the image processing apparatus 40 determines that the service use unit 48b of the image processing apparatus 40 receives the notification that the service providing system 20 manages the image processing apparatus 40 from the service providing system 20 (S165).

When the service use unit 48b determines in S163 that the service use unit 48b has been responded from the service providing system that the service providing system manages the image processing apparatus 40 inquired in S161 or when the service use unit 48b determines in S165 that the service use unit 48b has received the notification that the service providing system 20 manages the image processing apparatus 40 from the service providing system 20, the service use unit 48b determines whether or not the service use application 47b has been activated on the basis of the activation information in the application setting information 47d (S166).

When the service use unit 48b determines in S166 that the service use application 47b has not been activated, the service use unit 48b sends a request to activate the service use application 47b (hereinafter, referred to as "activation request") to the service providing system 20 (S167). The service use unit 48b includes the tenant name indicated by the application setting information 47d and the serial number of the image processing apparatus 40 in the activation request in S167.

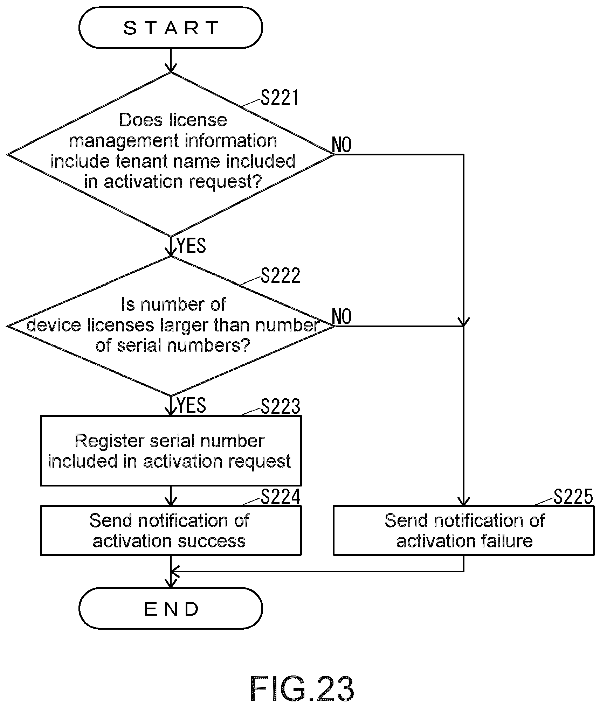

Fig. 23 is a flowchart of the service providing system 20 in a case where the activation of the service use application 47b is requested.

When the service providing unit 25a of the service providing system 20 receives the activation request from the image processing apparatus 40, the service providing unit 25a of the service providing system 20 executes an operation shown in Fig. 23.

As shown in Fig. 23, the service providing unit 25a determines whether or not the tenant name included in the activation request is included in the license management information 24e (S221).

When the service providing unit 25a determines in S221 that the tenant name included in the activation request is included in the license management information 24e, the service providing unit 25a determines whether or not the number of device licenses associated with the tenant name included in the activation request in the license management information 24e is larger than the number of serial numbers associated with the tenant name included in the activation request in the license management information 24e (S222).

When the service providing unit 25a determines in S222 that the number of device licenses associated with the tenant name included in the activation request in the license management information 24e is larger than the number of serial numbers associated with the tenant name included in the activation request in the license management information 24e, the service providing unit 25a registers the serial number included in the activation request in the license management information 24e in association with the tenant name included in the activation request (S223).

When the processing of S223 ends, the service providing unit 25a sends a notification of an activation success to the image processing apparatus 40 (S224) and terminates the operation shown in Fig. 23.

When the service providing unit 25a determines in S221 that the tenant name included in the activation request is not included in the license management information 24e or when the service providing unit 25a determines in S222 that the number of device licenses associated with the tenant name included in the activation request in the license management information 24e is not larger than the number of serial numbers associated with the tenant name included in the activation request in the license management information 24e, the service providing unit 25a sends a notification of an activation failure to the image processing apparatus 40 (S225) and terminates the operation shown in Fig. 23.

As shown in Figs. 13 to 16, when the processing of S167 ends, the service use unit 48b of the image processing apparatus 40 determines whether or not the service use unit 48b of the image processing apparatus 40 has received the notification of the activation failure from the service providing system 20 (S168).

When the service use unit 48b determines in S168 that the service use unit 48b has not received the notification of the activation failure from the service providing system 20, the service use unit 48b determines whether or not the service use unit 48b has received the notification of the activation success from the service providing system 20 (S169).

When the service use unit 48b determines in S169 that the service use unit 48b has not received the notification of the activation success from the service providing system 20, the service use unit 48b executes the processing in S168.

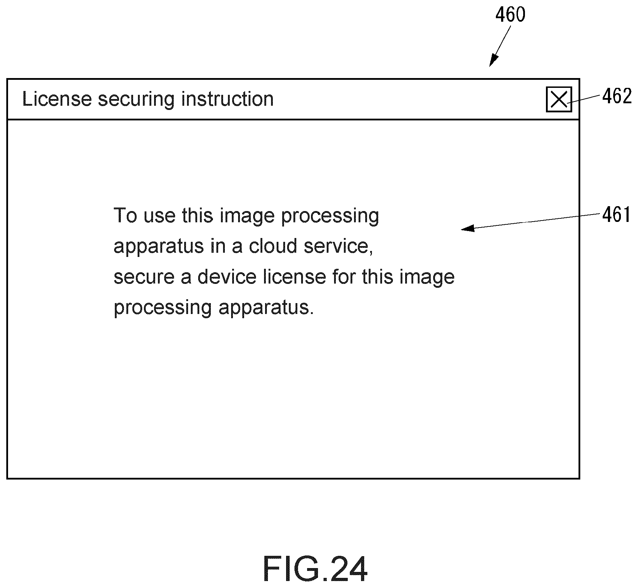

When the service use unit 48b determines in S168 that the service use unit 48b has received the notification of the activation failure from the service providing system 20, the service use unit 48b displays a screen that instructs to secure a device license for using the service use application 47b (hereinafter, referred to as "license securing instruction screen") 460 (e.g., see Fig. 24) on the display unit 42 (S170).

Fig. 24 is a diagram showing an example of the license securing instruction screen 460.

The license securing instruction screen 460 shown in Fig. 24 includes a text 461 that shows a message that instructs to secure a device license for using the service use application 47b and a close button 462 for closing the license securing instruction screen 460.

When the close button 462 of the license securing instruction screen 460 is pressed, the service use unit 48b terminates the display of the license securing instruction screen 460 on the display unit 42.

As shown in Figs. 13 to 16, when the processing of S170 ends, the service use unit 48b determines whether or not the close button 462 has been pressed until the service use unit 48b determines that the close button 462 has been pressed (S171).

When the service use unit 48b determines in S171 that the close button 462 has been pressed, the service use unit 48b terminates the operation shown in Figs. 13 to 16.

When the service use unit 48b determines in S169 that the service use unit 48b has received the notification of the activation success from the service providing system 20, the service use unit 48b changes the value of the activation information in the application setting information 47d into "Activated" (S172).

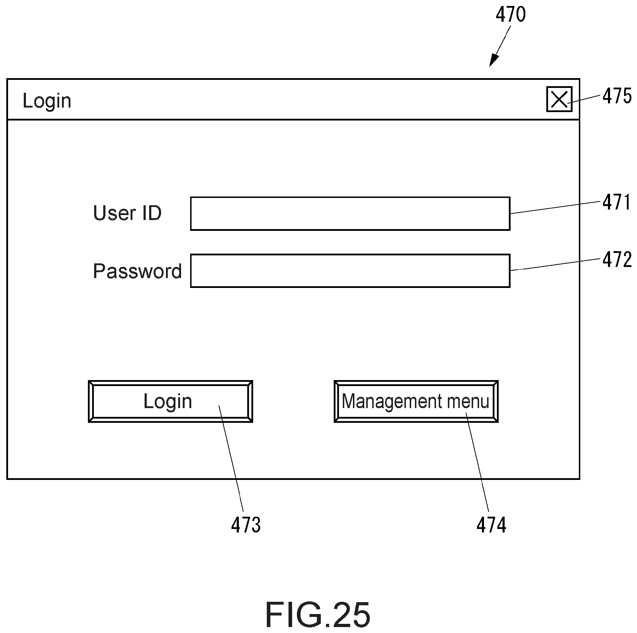

When the service use unit 48b determines in S166 that the service use application 47b has been activated or when the processing of S172 ends, the service use unit 48b displays a screen for the user to log into the service providing system 20 through the image processing apparatus 40 (hereinafter, referred to as "login screen") 470 (e.g., see Fig. 25) on the display unit 42 (S181).

Fig. 25 is a diagram showing an example of the login screen 470.

The login screen 470 shown in Fig. 25 includes a text box 471 for inputting the user ID of the user, a text box 472 for inputting the password of the user, a login button 473 for receiving the instruction to log into the service providing system 20, a management menu button 474 for displaying a management menu operable by the manager, and a close button 475 for closing the login screen 470.

When the login button 473, the management menu button 474, or the close button 475 is pressed, the service use unit 48b terminates the display of the login screen 470 on the display unit 42.

As shown in Figs. 13 to 16, when the processing of S181 ends, the service use unit 48b determines whether or not the close button 475 has been pressed (S182).

When the service use unit 48b determines in S182 that the close button 475 has not been pressed, the service use unit 48b determines whether or not the management menu button 474 has been pressed (S183).

When the service use unit 48b determines in S183 that the management menu button 474 has not been pressed, the service use unit 48b determines whether or not the login button 473 has been pressed (S184).

When the service use unit 48b determines in S184 that the login button 473 has not been pressed, the service use unit 48b executes the processing in S182.

When the service use unit 48b determines in S182 that the close button 475 has been pressed, the service use unit 48b terminates the operation shown in Figs. 13 to 16.

When the service use unit 48b determines in S183 that the management menu button 474 has been pressed, the service use unit 48b executes the processing in S185 to S193 similar to the processing in S144 to S152. It should be noted that when the service use unit 48b determines in S186 that the close button 443 of the PIN input screen 440 has been pressed, when the processing in S189 ends, or when the service use unit 48b determines in S191 that the close button 456 of the application setting screen 450 has been pressed, the service use unit 48b executes the processing in S181.

When the service use unit 48b determines in S184 that the login button 473 has been pressed, the service use unit 48b sends a login request using a combination of the user ID input to the text box 471 at a point of time at which the login button 473 is pressed and the password input to the text box 472 at a point of time at which the login button 473 is pressed to the service providing system 20 (S194).

When the service providing unit 25a of the service providing system 20 receives the request sent in S194, the service providing unit 25a of the service providing system 20 executes authentication on the basis of the combination of the user ID and the password included in the received request. Here, in a case where the combination of the user ID and the password included in the request sent in S194 is included in the user management information 24c, the service providing unit 25a determines that the authentication has been successfully completed and sends a notification of the user's login permitted to the image processing apparatus 40. On the other hand, in a case where the combination of the user ID and the password included in the request sent in S194 is not included in the user management information 24c, the service providing unit 25a determines that that the authentication has failed and sends a notification of the user's login denied to the image processing apparatus 40.

When the processing of S194 ends, the service use unit 48b of the image processing apparatus 40 determines whether or not the service use unit 48b of the image processing apparatus 40 has received the notification that the login that is a target of the request sent in S194 has been denied (S195).

When the service use unit 48b determines in S195 that the service use unit 48b has not received the notification that the login that is a target of the request sent in S194 has been denied, the service use unit 48b determines whether or not the service use unit 48b has received a notification that the login that is a target of the request sent in S194 has been permitted (S196).

When the service use unit 48b determines in S196 that the service use unit 48b has not received the notification that the login that is a target of the request sent in S194 has been permitted, the service use unit 48b executes the processing in S195.

When the service use unit 48b determines in S195 that the service use unit 48b has received the notification that the login that is a target of the request sent in S194 has been denied, the service use unit 48b displays the user's login denied on the display unit 42 for a specific time (S197) and executes the processing in S181.

When the service use unit 48b determines in S196 that the service use unit 48b has received the notification that the login that is a target of the request sent in S194 has been permitted, the service use unit 48b starts an operation linked to the cloud service provided by the service providing system 20 (S198) and terminates the operation shown in Figs. 13 to 16.

As described above, in a case where the service use application 47b is activated and a setting of the tenant name in the application setting information 47d of the service use application 47b has not been executed (NO in S121), the image processing apparatus 40 displays the service information screen 410 that shows the information related to the cloud service (S204 and S205). It is thus possible to encourage the user to acquire a license. As a result, it is possible to enhance the possibility that the user can use a cloud service that requires a license.

As shown in Fig. 18, the image processing apparatus 40 does not display the error message related to the service use application 47b during the display of the service information screen 410. It is thus possible to reduce the possibility that the user feel distrustful about the service use application 47b. As a result, it is possible to enhance the possibility that the user acquires a license.

The image processing apparatus 40 displays the initial setting screen 420 for setting the tenant name in the application setting information 47d, which is the cause to display the service information screen 410, in a case where the service information screen 410 is closed (YES in S124) (S125). It is thus possible to enhance the convenience.

The image processing apparatus 40 includes the telephone number of the service person in charge of the image processing apparatus 40 in the service information screen 410 as inquiry destination information for the user to inquire (S204). It is thus possible to effectively encourage the user to acquire a license. As a result, it is possible to enhance the possibility that the user can use a cloud service that requires a license. It should be noted that the inquiry destination information may be information other than the telephone number. For example, the inquiry destination information may be an e-mail address of the service person in charge of the image processing apparatus 40.

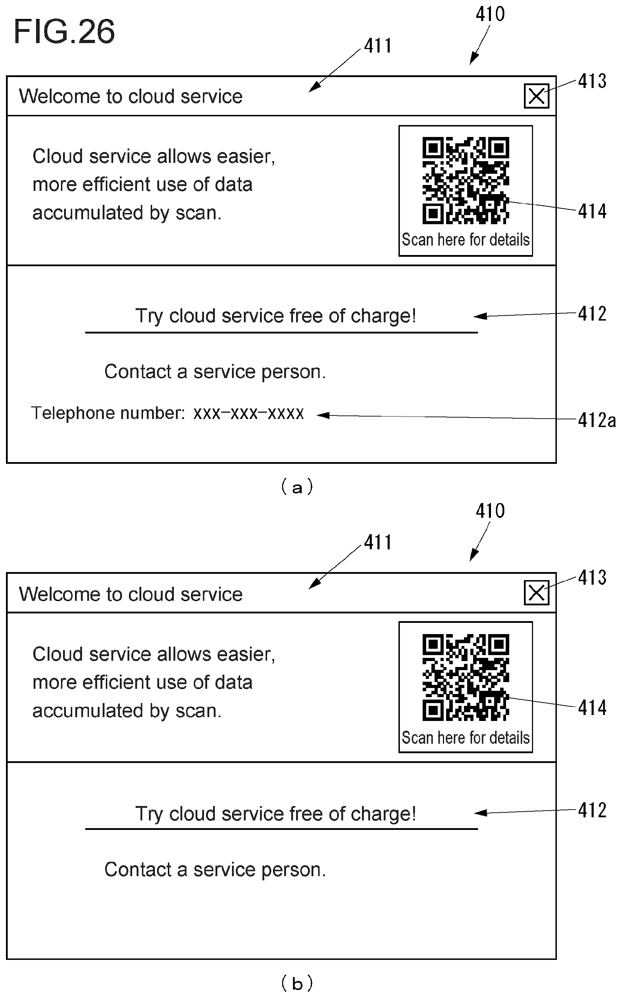

Hereinabove, as an example of the service information screen 410, the service information screen 410 shown in Fig. 18 has been described. However, the service information screen 410 may be other than that shown in Fig. 18. For example, the service information screen 410 may be that shown in Fig. 26.

(a) of Fig. 26 is a diagram showing an example of a service information screen 410 including a code image 414 and the telephone number of the service person in charge of the image processing apparatus 40. (b) of Fig. 26 is a diagram showing an example of the service information screen 410 including the code image 414 and not including the telephone number of the service person in charge of the image processing apparatus 40.

A configuration of the service information screen 410 shown in (a) of Fig. 26 is identical to the configuration of the service information screen 410 shown in (a) of Fig. 18, except that it includes the code image 414. The code image 414 includes a uniform resource locator (URL) that links to a webpage that shows information related to the cloud service provided by the service providing system 20 (hereinafter, referred to as "service introduction page"). For example, the code image 414 may be a QR code (registered trademark).

A configuration of the service information screen 410 shown in (b) of Fig. 26 is identical to the configuration of the service information screen 410 shown in (b) of Fig. 18, except that it includes the code image 414.

The service use unit 48b may display the service information screen 410 shown in (a) of Fig. 26 instead of the service information screen 410 shown in (a) of Fig. 18 in S204 (see Fig. 17). The service use unit 48b may display the service information screen 410 shown in (b) of Fig. 26 instead of the service information screen 410 shown in (b) of Fig. 18 in S205 (see Fig. 17).

The service introduction page may be provided for each destination of the image processing apparatus. The destination is registered in the image processing apparatus. The service use application 47b includes a code image for each destination. In a case of displaying the service information screen 410 shown in Fig. 26, the service use unit 48b displays the service information screen 410 including the code image corresponding to the destination registered in the image processing apparatus 40.

In a case where the image processing apparatus 40 has the service use application 47b preinstalled, the user's understanding of the service use application 47b is likely to be low at a point of time at which the user starts the service use application for the first time as compared to a configuration in which the service use application 47b is installed later by the user. Therefore, displaying the service information screen 410 can improve its significance.

In the present embodiment, the setting execution button 424 of the initial setting screen 420 is operable only in a case where certain values are input to all the text box 421, the text box 422, and the text box 423. However, the setting execution button 424 of the initial setting screen 420 may be operable in a case where no value is input to at least one of the text box 421, the text box 422, and the text box 423. Similarly, the setting execution button 454 of the application setting screen 450 may be operable even in a case where no value is input to at least one of the text box 451, the text box 452, and the text box 453.

In the present embodiment, the electronic apparatus according to the present disclosure is an image processing apparatus. However, the electronic apparatus according to the present disclosure may be an electronic apparatus other than the image processing apparatus.

In the present embodiment, the cloud service according to the present disclosure is a cloud service for utilizing data accumulated by scanning in the image processing apparatus. However, the cloud service according to the present disclosure may be a cloud service other than the cloud service for utilizing data accumulated by scanning in the image processing apparatus.

It should be understood by those skilled in the art that various modifications, combinations, subcombinations and alterations may occur depending on design requirements and other factors insofar as they are within the scope of the appended claims or the equivalents thereof.

## Claims

1. A service use application (47b) that is a service use application that is an application program for using a cloud service that requires a license, wherein
an electronic apparatus (40) is caused to realize a service use unit (48b) that uses the cloud service, and
in a case where the service use application (47b) is activated and a setting of a tenant name of a tenant to which the electronic apparatus (40) belongs out of settings of the service use application (47b) is not executed, the service use unit (48b) displays a service information screen (410) that is a screen that shows information related to the cloud service.

2. The service use application (47b) according to claim 1, wherein
the electronic apparatus (40) is capable of storing inquiry destination information for the user to inquire, and
in a case where the inquiry destination information is stored in the electronic apparatus (40), the service use unit (48b) includes the inquiry destination information stored in the electronic apparatus (40) in the service information screen (410).

3. The service use application (47b) according to claim 1, wherein
the service use unit (48b) does not display an error message related to the service use application (47b) during display of the service information screen (410).

4. The service use application (47b) according to claim 1, wherein
in a case where the service information screen (410) is closed, the service use unit (48b) displays a setting screen (420) for executing a setting of the tenant name out of settings of the service use application (47b).

5. The service use application (47b) according to claim 1, wherein
the service information screen (410) includes a code image (414) including a uniform resource locator (URL) that links to a webpage that shows the information related to the cloud service.

6. The service use application (47b) according to claim 1, wherein
in a case where the service use application (47b) is activated and a setting of the tenant name out of settings of the service use application (47b) is executed, the service use unit (48b) inquires to a service providing system (20) that provides the cloud service whether or not the service use unit (48b) manages the tenant with the tenant name.

7. The service use application (47b) according to claim 6, wherein
in a case where the service use unit (48b) is responded from the service providing system (20) that the service use unit (48b) manages the tenant with the tenant name, the service use unit (48b) inquires to the service providing system (20) whether or not the service providing system (20) manages the electronic apparatus (40).

8. The service use application (47b) according to claim 7, wherein
in a case where the service use unit (48b) is responded from the service providing system (20) that the service providing system (20) manages the electronic apparatus (40), the service use unit (48b) determines whether or not the service use application (47b) is activated.

9. The service use application (47b) according to claim 7, wherein
in a case where the service use unit (48b) is responded from the service providing system (20) that the service providing system (20) does not manage the electronic apparatus (40), the service use unit (48b) determines whether or not the service use application (47b) is activated after causing the service providing system (20) to manage the electronic apparatus (40).

10. The service use application (47b) according to claim 8 or 9, wherein
in a case where the service use unit (48b) determines that the service use application (47b) is not activated, the service use unit (48b) requests activation of the service use application (47b) from the service providing system (20).

11. The service use application (47b) according to claim 8 or 9, wherein
in a case where the service use unit (48b) determines that the service use application (47b) is not activated, the service use unit (48b) displays a license securing instruction screen that is a screen that instructs to secure a license for using the service use application (47b).

12. An electronic apparatus (40) that is an electronic apparatus (40) that realizes a service use unit (48b) that uses a cloud service by executing a service use application (47b) that is an application program for using the cloud service that requires a license, wherein
in a case where the service use application (47b) is activated and a setting of a tenant name of a tenant to which the electronic apparatus (40) belongs out of settings of the service use application (47b) is not executed, the service use unit (48b) displays a service information screen (410) that is a screen that shows information related to the cloud service.

13. A system (10), comprising:
a service providing system (20) that provides a cloud service that requires a license; and
an electronic apparatus (40) that realizes a service use unit (48b) that uses the cloud service by executing a service use application (47b) that is an application program for using the cloud service that is provided by the service providing system (20), wherein
in a case where the service use application (47b) is activated and a setting of a tenant name of a tenant to which the electronic apparatus (40) belongs out of settings of the service use application (47b) is not executed, the service use unit (48b) displays a service information screen (410) that is a screen that shows information related to the cloud service.
